Europäisches Patentamt

European Patent Office

Office européen des brevets

(11) Publication number: **0 405 412 A2**

# EUROPEAN PATENT APPLICATION

(21) Application number: **90112059.2**

(22) Date of filing: **25.06.90**

(51) Int. Cl.⁵: **H02K 53/00**

(30) Priority: **27.06.89 JP 164846/89**

(43) Date of publication of application:
**02.01.91 Bulletin 91/01**

(84) Designated Contracting States:
**DE FR GB IT**

(71) Applicant: **Kanazawa, Yukio**
**880, Sekishi-cho**
Hamamatsu-shi, Shizuoka, 431-31(JP)

(72) Inventor: **Kanazawa, Yukio**
**880, Sekishi-cho**
**Hamamatsu-shi, Shizuoka, 431-31(JP)**

(74) Representative: **Schwan, Gerhard, Dipl.-Ing.**
**Elfenstrasse 32**
**D-8000 München 83(DE)**

(54) **Prime mover.**

(57) The first rotary body and the second rotary body are rotatably arranged coaxially in the cylindrical body base, and the first rotary body is connected with the second rotary body at an appointed speed change ratio.

A plurality of first magnetic bodies which are for instance magnetized to the same polarity are arranged with an appointed pitch on the cylindrical body base, and a plurality of second magnetic bodies made, for instance, of iron are arranged with an appointed pitch on the first rotary body confronted with the first magnetic bodies.

A plurality of magnetic control members are arranged with an appointed pitch in the space formed between a plurality of the first magnetic bodies and a plurality of the second magnetic bodies, and the corresponding magnetic control members are supported by the second rotary body.

The first and the second magnetic bodies are relatively divided into a plurality of rows for the axial direction of the cylindrical body base in connection with the magnetic control members and individually slide in the circumferential direction.

Therefore, the first rotary body rotates in an appointed direction by action of the magnetic attraction of the first magnetic bodies for the second magnetic bodies and the second rotary body also rotates in an appointed direction by revolution of the first rotary body.

And when the second magnetic bodies arrive at the confronted position for the first magnetic bodies, the magnetic attraction action of the first magnetic bodies upon the second magnetic bodies under this condition can be shielded by the magnetic control members.

As such a condition as shown in the above is repeated one after another for each set of the first magnetic bodies, the second magnetic bodies and the magnetic control members in the axial direction of the cylindrical body base, the first rotary body can rotate in an appointed direction and the revolution thereof can be maintained.

Fig. 1
( a )

## PRIME MOVER

BACKGROUND OF THE INVENTION

Field of the invention

This invention relates to a prime mover in which rotary force can be secured with the magnetic action of a magnet.

Description of the Prior Art

For instance, in an electric motor which is a kind of the prime movers, electric energy is converted to mechanical rotary motion energy by utilizing the force generated by the action between a current flowing conductor and the magnetic field thereof, thereby causing the rotary force to be secured.

Namely, in order to maintain the condition of revolution, it is requisite to keep an electric current on being flown at all times.

SUMMARY OF THE INVENTION

It is an object of the invention to provide a prime mover by which a rotary force can be secured only with the magnetic action of a magnet, for example, without supplying an electric power as shown in the above.

In order to achieve the above object, the main means which is employed by the invention comprises, in the gist thereof, a cylindrical body base, a plurality of first magnetic bodies arranged on the cylindrical body base with an appointed pitch, a first rotary body rotatably supported on the cylindrical body base, a plurality of second magnetic bodies arranged with an appointed pitch on the first rotary body confronted with a plurality of the first magnetic bodies and relatively magnetized for the first magnetic bodies, a second rotary body rotatably supported coaxially with the first rotary body and so connected to the first rotary body that the second rotary body can rotate at an appointed speed change ratio for the first rotary body, and a plurality of magnetic control members arranged with an appointed pitch in the space formed between a plurality of the first magnetic bodies and a plurality of the second magnetic bodies and supported by the second rotary body, and is characterized in that a plurality of the first magnetic bodies and a plurality of the second magnetic bodies are relatively divided into a plurality of rows in the axial direction of the cylindrical body base for a plurality of the magnetic control members and a plurality of the first and the second magnetic bodies individually slide in the circumferential direction so that a plurality of the first and the second magnetic bodies can be individually stretched together on the circumference when being observed from the side thereof.

Also, in the case that a substance relatively magnetized for the first magnetic bodies are used as the second magnetic bodies, it is good that iron which is one of the ferromagnetic bodies is used as the first magnetic bodies.

On the other hand, in the case that a substance relatively magnetized for the second magnetic bodies is used as the first magnetic bodies, it is good that iron is used as the second magnetic bodies, contrarily to the above case.

It is also good that a substance magnetized to the same polarity as for the first and the second magnetic bodies is used or a substance alternately magnetized to a different polarity as a plurality of the first magnetic bodies.

Furthermore, a magnetic shielding substance (for instance, nickel alloy) or iron which can absorb the magnetism of, for instance, the magnetized first magnetic bodies and second magnetic bodies may be used as the magnetic control members.

Also, when the corresponding magnetic control members rotates, for instance, in the space formed between the first and the second magnetic bodies which are magnetized to the same polarity in the case that iron is used as the above magnetic control members, the corresponding magnetic control members are attracted to the first and the second magnetic bodies if the thickness dimension of the magnetic control members is comparatively large. If this thickness dimension thereof is comparatively small, the corresponding magnetic control members mutually penetrate the magnetic force from the first and the second magnetic bodies (the magnetic control members themselves are totally magnetized) and repulses either of the first or the second magnetic bodies. Therefore, it is good if the thickness dimension of the corresponding magnetic control members is set to such a value on the forces of attraction and repulsion can be balanced.

In a prime mover according to the invention, in the case that for instance a magnetized substance is used as the first magnetic bodies, iron is used as the second magnetic bodies and a magnetic shielding substance is used as the magnetic control members, one of the second magnetic bodies on the first rotary body is attracted by one of the first magnetic bodies on the cylindrical body base to cause the corresponding first rotary body to rotate in an appointed direction. As one of the second magnetic bodies approaches one of the first magnetic bodies, one of the magnetic control members shifts in such a direction as the magnetic action between one of the first magnetic bodies and one of the second magnetic bodies can be shielded.

As one of the second magnetic bodies reaches the position confronted with one of the first magnetic bodies, the magnetic attraction force at this time can be completely shielded by one of the magnetic control members.

Thereafter, the other second magnetic bodies on the first rotary body begins being attracted by one of the first magnetic bodies, the first rotary body further rotates in an appointed direction.

Such a state as shown in the above description is repeated alternately at each of the rows, thereby causing the condition of revolution of the first rotary body in an appointed direction to be maintained.

Even in the case that iron is used as the first magnetic bodies and a magnetized substance is used as the second magnetic bodies respectively, the condition of revolution of the first rotary body in an appointed direction can be maintained by action of the magnetic attraction force as well as in the above case.

Also, in a prime mover according to the invention, in the case that a substance commonly magnetized to the same polarity is used as the first and the second magnetic bodies, the first rotary body rotates in an appointed direction by action of magnetic repulsion between the first magnetic bodies and the second magnetic bodies, thereby causing the condition of revolution to be maintained.

Therefore, in the prime mover, rotary force can be secured only by magnetic action of a magnet without supplying any electric power in, for instance, an electric motor.

BRIEF DESCRIPTION OF THE DRAWINGS

Fig. 1 shows the structure of a prime mover according to one example of the embodiments of the invention,
Fig. 1 (a) is a side elevation view thereof,
Fig. 1 (b) is a sectional view taken along with the line A - A' in Fig. 1 (a),
Fig. 1 (c) is side sectional view taken along with the line B - B' in Fig. 1 (b),
Fig. 1 (d) is side, sectional view taken along with the line C - C' in Fig. 1 (b),
Fig. 1 (e) is side sectional view taken along with the line D - D' in Fig. 1 (b),
Fig. 1 (f) is side sectional view taken along with the line E - E' in Fig. 1 (b),
Fig. 2 (a) through Fig. 2 (d) are the action explanation views showing the condition of revolution of the above primer mover.

DETAILED DESCRIPTION OF THE PREFERRED EMBODIMENTS

With reference to the drawings attached herewith, the preferred embodiment of the invention is explained for more understanding the invention. The ensuing embodiment is one of the preferred embodiments in which the invention is embodied and it does not intend to limit the technical scope thereof.

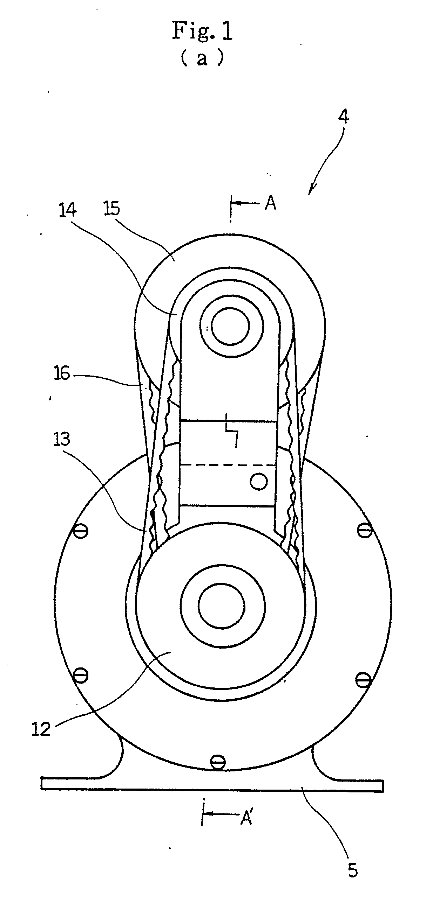

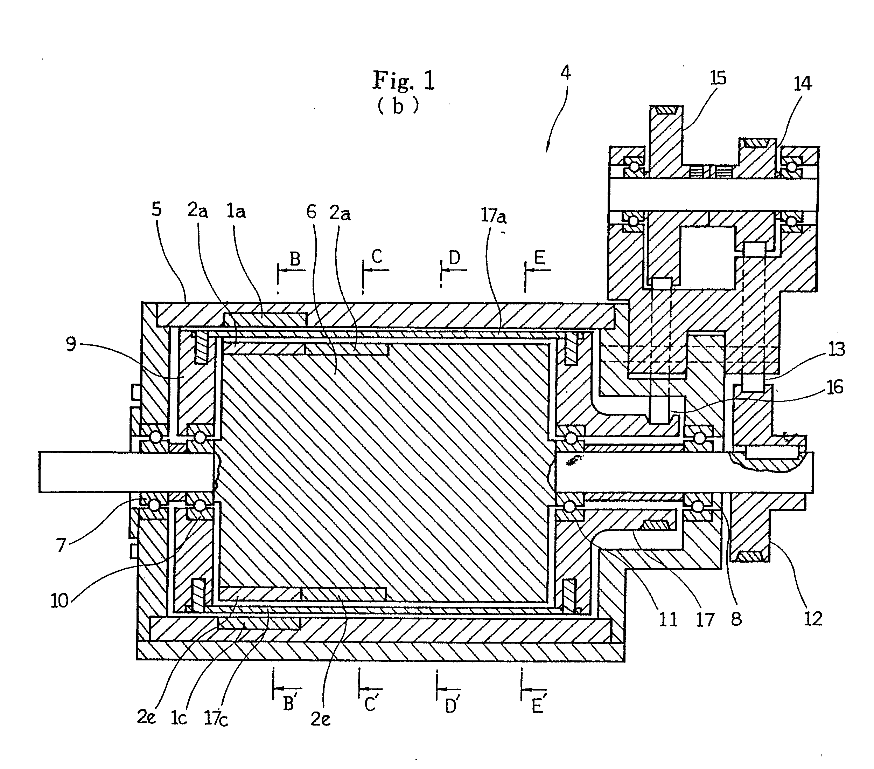

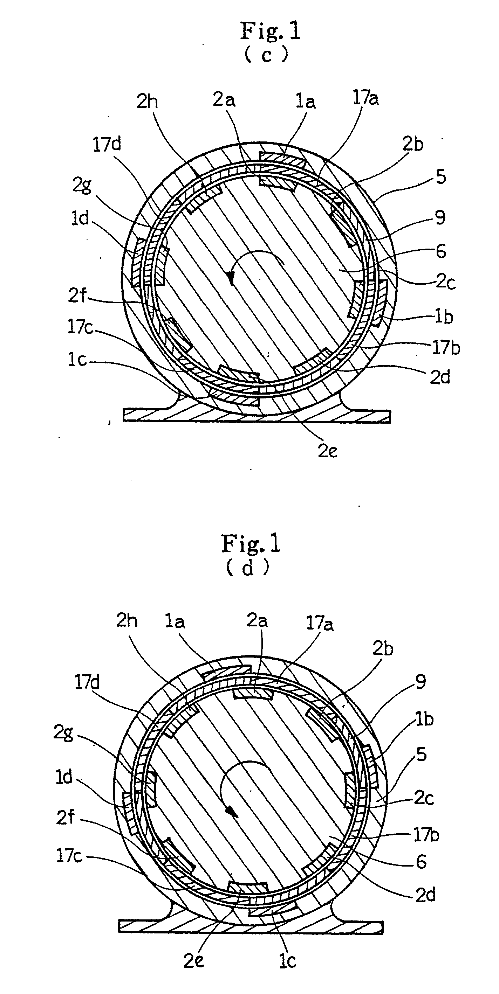

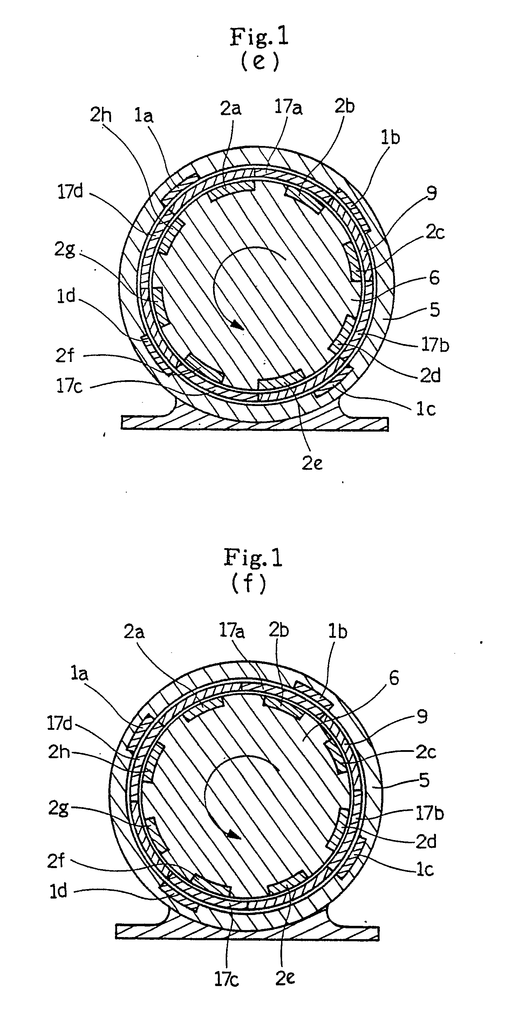

In a prime mover in according to the invention, four first magnetic bodies 1a through 1d of the same polarity (for instance "N" pole), which are observed on the side section view, are arranged with equal pitch in the circumferential direction on the inner periphery of the cylindrical body base 5 as shown in Fig. 1 (a) through Fig. 1 (f).

A column-like rotor 6 (first rotary body) is arranged in the cylindrical body base 5 coaxially therewith. The rotor 6 is rotatably supported on the cylindrical body base 5 by means of bearings 7 and 8.

Eight second magnetic bodies 2a through 2h made, for instance, of an iron member are arranged with equal pitch in the circumferential direction at the position confronted with the first magnetic bodies 1a through 1d on the cylindrical body base 5.

The width dimension of the first magnetic bodies 1a through 1d in the circumferential direction thereof is roughly equal to that of the second magnetic bodies 2a through 2h in the circumferential direction thereof, and the ratio of the quantity thereof is one to two.

A control rotor 9 (the second rotary body) is arranged coaxially with the cylindrical body base 5 and the rotor 6 therebetween. The control rotor 9 is rotatably supported on the rotor 6 by means of bearings 10 and 11.

The control rotor 9 is made, for instance, of such a synthetic resin as polypropyrene which can sufficiently penetrate the magnetism without being magnetized.

Furthermore, the control rotor 9 is connected to the rotor 6 by way of a timing pulley 12, a timing belt 13, timing pulleys 14 and 15, a timing belt 16 and a timing pulley 17 so that it can rotate at the speed change ratio (speed increment ratio) of two to one (2:1) for the rotor 6.

In this case, it is possible to use a gear transmission mechanism instead of a transmission mechanism in which such timing pulleys and timing belts as shown in the above are utilized.

For instance, four magnetic control members 17a through 17d are arranged with equal pitch in the circumferential direction in the space formed between the first magnetic bodies 1a through 1d and the second magnetic bodies 2a through 2h. And these magnetic control members 17a through 17d are supported by the control rotor 9. The magnetic control members 17a through 17d are made for instance of nickel alloy and have such a property that they can absorb magnetism and do not penetrate it. And the width dimension of the magnetic control members 17a through 17b in the circumferential direction thereof are set to roughly two times the width dimension of the first magnetic bodies 1a through 1d in the circumferential direction thereof.

Furthermore, in a prime mover 4 according to this embodiment of the invention, the first magnetic bodies 1a through 1d and the second magnetic bodies 2a Chrough 2h are relatively divided into, for instance, four rows in the axial direction of the cylindrical body base 5, respectively, in connection with the magnetic control members 17a through 17d. Moreover, the first magnetic bodies 1a through 1d and the second magnetic bodies 2a through 2h individually slide in the circumferential direction thereof separately, so that they can stretch on the circumference when being observed on the side sectional view.

In this case, the relative relationship among the first magnetic bodies 1a through 1d on the cylindrical body base 5, the magnetic control members 17a through 17d on the control rotor 9 and the second magnetic bodies 2a through 2h on the rotor 6 is just as shown in Fig. 1 (c) for the first row in Fig. 1 (b) (the left end row in the same Figure), is just as shown in Fig. 1 (d) for the second row, is just as shown in Fig. 1 (e) for the third row, and is just as shown in Fig. (f) for the fourth row.

Therefore, the four-divided first magnetic bodies 1a through 1d are just as being in the stretching state so as to cover one full turn, for the magnetic control members 17a through 17d, in the circumferential direction when being observed on the side sectional view.

Also, the four-divided second magnetic bodies 2a through 2h are just as being in the stretching state so as to cover two full turns, for the magnetic control members 17a through 17d, in the circumferential direction when being observed on the side sectional view.

The prime mover in according to the embodiment of the invention is so composed as shown in the above description.

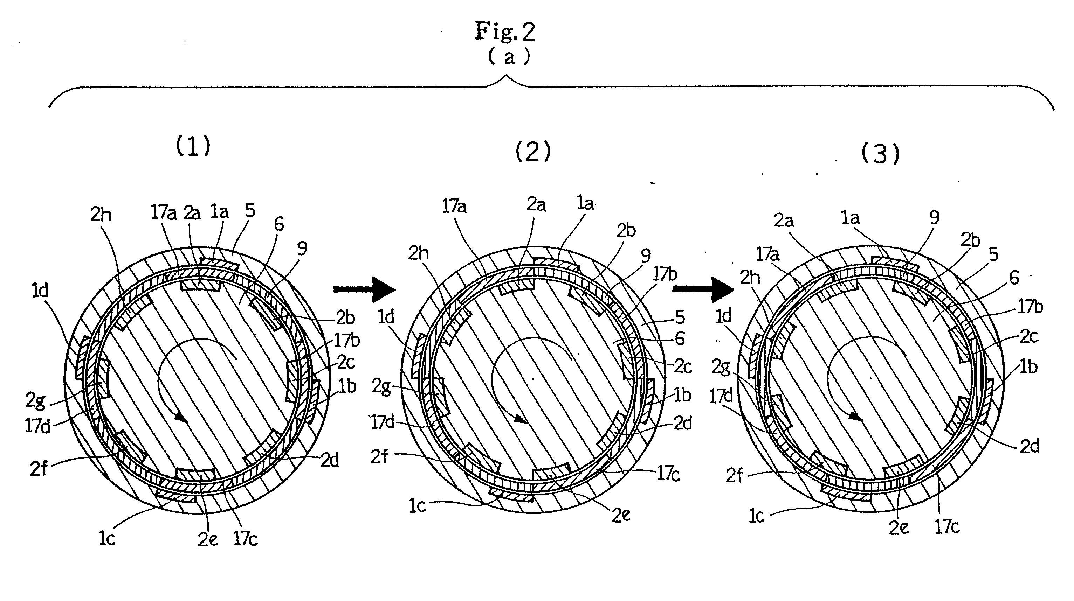

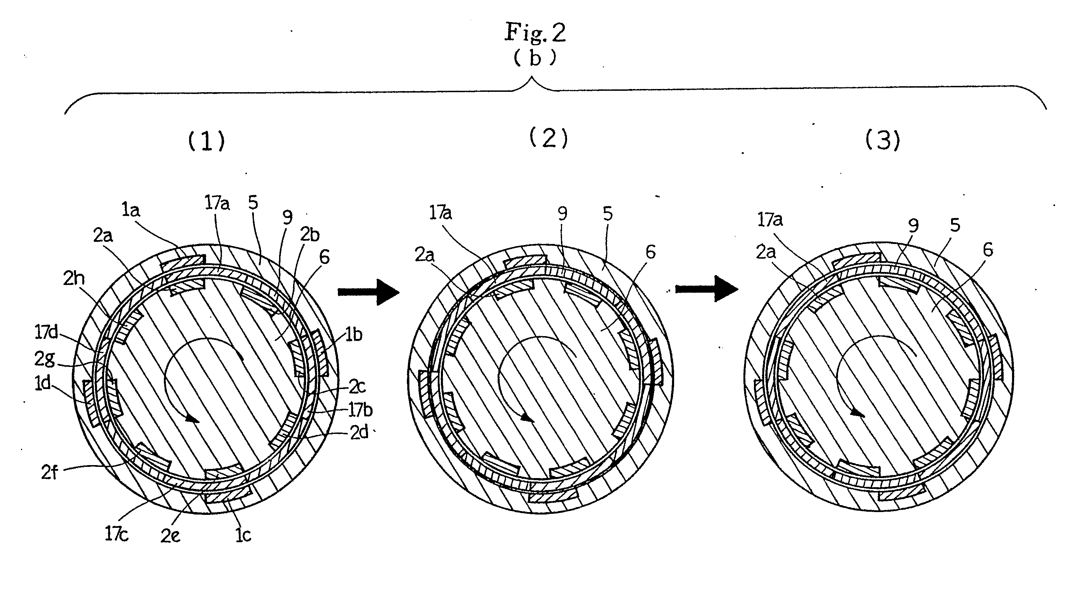

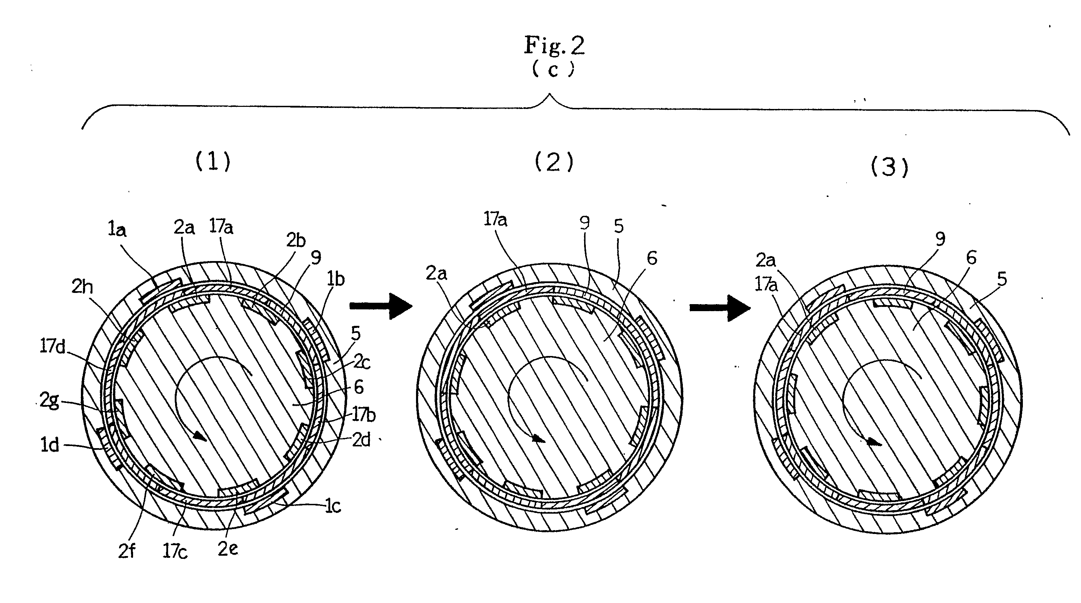

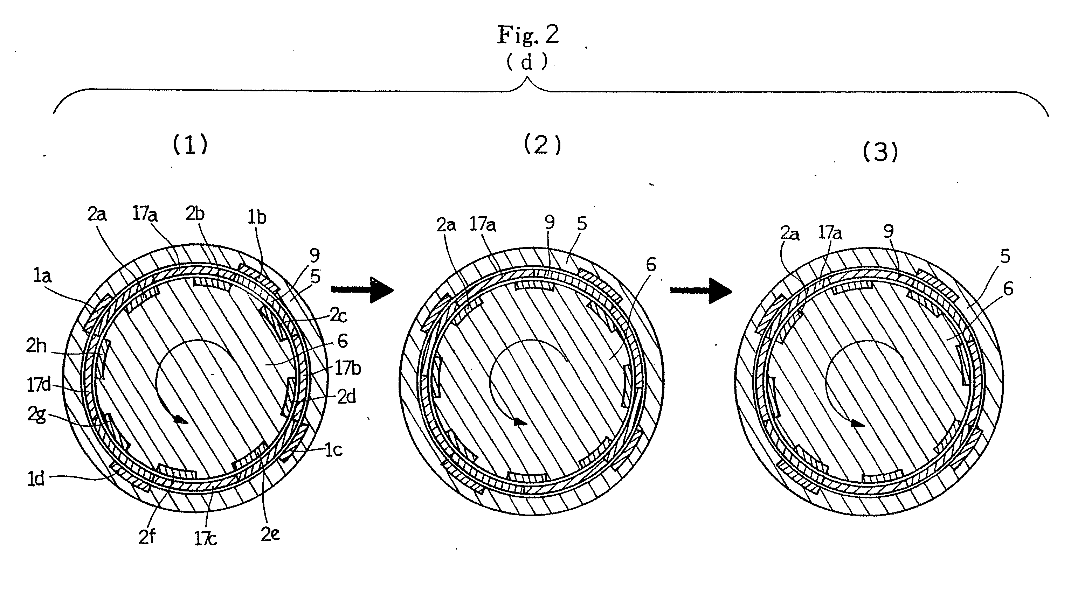

Consecutively, the action sequence of the prime mover in is explained with reference to Fig. 1 and Fig. 2.

Fig. 2 (a) shows the changed state of the first row (Refer to Fig. 1 (c)), when the prime mover in has rotated, Fig. 2 (b) shows the changed state of the second row (Refer to Fig. 1 (d)) when the prime mover in has rotated, Fig. 2 (c) shows the changed state of the third row (Refer to Fig. 1 (e)) when the prime mover in has rotated, and Fig. 2 (d) shows the changed state of the fourth row (Refer to Fig. 1 (f)) when the prime mover in has rotated, respectively.

And for instance, Fig. 2 (b) (1) corresponds to the state shown in Fig. 1 (c), Fig. 2 (b) (2) corresponds to the state shown in Fig. 2 (a) (1), Fig. 2 (b) (3) corresponds to the state shown in Fig. 2 (a) (2), Fig. 2 (c) (1) corresponds to the state shown in Fig. 1 (d), Fig. 2 (c) (2) corresponds to the state shown in Fig. 2 (b) (1), and Fig. 2 (c) (3) corresponds to the state shown in Fig. 2 (b) (2). Furthermore, Fig. 2 (d) (1) corresponds to the state shown in Fig. 1 (e), Fig. 2 (d) (2) corresponds to the state shown in Fig. 2 (c) (1), and Fig. 2 (d) (3) corresponds to the state shown in Fig. 2 (c) (2).

Firstly, for instance, in Fig. 1 (c) (regarding the first row), for example, the second magnetic body 2a on the rotor 6 is covered with the magnetic control member 17a on the control rotor 9 for the first magnetic body 1a on the cylindrical body base 5, and is in such a state as magnetic action is interrupted. Hence, for instance, the second magnetic body 2a, for instance, on the rotor 6 of the third row (Refer to Fig. 1 (e)) is attracted by the first magnetic body 1a on the cylindrical body base 5 and is driven and rotated in the counterclockwise direction of the corresponding rotor 6.

When the rotor 6 is driven and rotated in the counterclockwise direction, and when the first magnetic bodies 1a through 1d, the magnetic control members 17a through 17d, and the second magnetic bodies 2a through 2h enter such a state as shown in Fig. 2 (a) (1), the first row of the corresponding prime mover 4 is in a roughly interrupted state of magnetism as well as in the above case, thereby causing the rotor 6 to be hardly given a rotary force. However, at this time, for instance, in the fourth row (Refer to Fig. 2 (d) (1)), the second magnetic body 2a, for instance, on the rotor 6 is attracted by the first magnetic body 1a on the cylindrical body base 5. At the same time, in the third row (Refer to Fig.2 (c) (1)), the second magnetic body 2a, for instance, on the rotor 6 is attracted by the first magnetic body 1a on the cylindrical body base 5. Furthermore, the second magnetic body 2c, for instance, on the rotor 6 is attracted by the first magnetic body 1b on the cylindrical body base 5, thereby resulting in that the rotary force in the counterclockwise direction actuates on the rotor 6.

Namely, while the second magnetic body 2a is passing through the position confronted with the first magnetic body 1a for the first row (Refer to Fig. 2 (a) (1)), this second magnetic body 2a is covered by the magnetic control member 17a.

However, as the control rotor 9 which supports the magnetic control members 17a through 17d is driven and rotated by the rotor 6 at a speed of two times for the corresponding rotor 6, the first magnetic body 1a is going to be exposed gradually from the magnetic control member 17a (Refer to Fig. 2 (a) (2)) in accompanying with the second magnetic body 2b sliding in the direction of revolution for the first magnetic body 1a. Then, the second magnetic body 2b is attracted by the first magnetic body 1a, thereby causing the rotor 6 to be furthermore driven and rotated in the counterclockwise direction.

And the second magnetic body 2b is attracted by the first magnetic body 1a and the rotor 6 is driven and rotated. Accordingly, the second magnetic body 2b, begins being covered with the magnetic control member 17b (Refer to Fig. 2 (a) (3)). And as the second magnetic body 2b reaches the position confronted with the first magnetic body 1a, the corresponding second magnetic body 2b enters such a state that it can be completely covered with the magnetic control member 17b for the first magnetic body 1a. Also, this state corresponds to the state shown in Fig. 1(c).

And as such a magnetic attraction action as shown in the above is alternately repeated in each of the rows, the rotary state of the rotor 6 can be maintained.

Therefore, in the prime mover 4, rotary force can be secured only with the magnetic action of a magnet without supplying any electric power in an electric motor, for instance.

Also, in the prime mover in according to the embodiment of the invention, it is possible to change all the polarities of the first magnetic bodies 1a through 1d from "N" polarity to "S" polarity or change them from "N" polarity to "S" polarity alternately and to compose the first magnetic bodies 1a through 1d of an iron member or to compose the second magnetic bodies 2a through 2h of a substance magnetized to the same polarity, respectively. Besides, it is possible to compose all of the first magnetic bodies 1a through 1d and the second magnetic bodies 2a through 2h of a substance magnetized to the same polarity. In this case, contrarily to the above case, the rotor 6 rotates by action of magnetic repulsion between the first magnetic bodies 1a through 1d and the second magnetic bodies 2a through 2h, and the rotary state can be maintained.

Also, the prime mover in according to the embodiment of the invention is so composed that the magnetic control members 17a through 17d can be relatively divided into four rows for the axial direction of the cylindrical body base 5 for the first magnetic bodies 1a through 1d and the second magnetic bodies 2a through 2h and the magnetic control members 17a through 17d can slide in the circumferential direction so as to stretch on the circumference when being observed from the side sectional view.

Furthermore, an iron member may be used as the magnetic control members 17a through 17d. In this case, in the case that the thickness dimension of the magnetic control members 17a through 17d is comparatively large when the magnetic control members 17a through 17d rotates in the space between the first magnetic bodies 1a through 1d and the second magnetic bodies 2a through 2h magnetized to the same polarity, the magnetic control members 17a through 17d are attracted by the first and the second magnetic bodies. If this thickness dimension is comparatively small, the magnetic control members 17a through 17d mutually penetrate magnetic force from the first and the second magnetic bodies (the magnetic control members themselves are totally magnetized) and repulse either of the first or the second magnetic bodies. Therefore, it is good that the thickness dimension of the magnetic control members 17a through 17d is set to such a value that the forces of attraction and repulsion can be balanced.

Also furthermore, it is possible to compose the prime mover according to the invention by properly changing each quantity of the first magnetic bodies 1a through 1d, the second magnetic bodies 2a through 2h and the magnetic control members 17a through 17d, the thickness dimension in the circumferential direction thereof, the number of divisions for the axial direction of the cylindrical body base 5, and the speed change ratio of the control rotor 9 for the rotor 6.

## Claims

1. A prime mover comprising:-
a cylindrical body base,
a plurality of first magnetic bodies arranged on the cylindrical body base with an appointed pitch,
a first rotary body rotatably supported on the cylindrical body base,
a plurality of second magnetic bodies arranged with an appointed pitch on the first rotary body confronted with a plurality of the first magnetic bodies and relatively magnetizeted for the first magnetic bodies,
a second rotary body rotatably supported coaxially with the first rotary body and so connected to the first rotary body that the second rotary body can rotate at an appointed speed change ratio for the first rotary body, and

a plurality of magnetic control members arranged with an appointed pitch in the space formed between a plurality of the first magnetic bodies and a plurality of the second magnetic bodies and supported by the second rotary body,
and characterized in, that a plurality of the first magnetic bodies and a plurality of the second magnetic bodies are relatively divided into a plurality of rows in the axial direction of the cylindrical body base for a plurality of the magnetic control members and a plurality of the first and the second magnetic bodies individually slide in the circumferential direction so that a plurality of the first and the second magnetic bodies can be individually stretched together on the circumference when being observed from the side thereof.

2. A prime mover claimed in the claim 1, wherein the first magnetic bodies are made of iron and the second magnetic bodies are made of a substance relatively magnetized for the first magnetic bodies.

3. A prime mover claimed in the claim 1, wherein the second magnetic bodies are made of iron and the first magnetic bodies are made of a substance relatively magnetized for the second magnetic bodies.

4. A prime mover claimed in the claim 1, wherein both the first magnetic bodies and the second magnetic bodies are made of a substance magnetized to the same polarity.

5. A prime mover claimed in the claim 1, wherein a plurality of the first magnetic bodies are made of a substance alternately magnetized to a different polarity.

6. A prime mover claimed in the claim 1, 2, 3, 4, or 5, wherein the magnetic control members are made of nickel alloy.

# Fig. 1
## ( a )

Fig. 1
(b)

## Fig. 1
### ( c )

## Fig. 1
### ( d )

## Fig.1
## (e)

## Fig.1
## (f)

## Fig.2
### ( a )

( 1 )                    ( 2 )                    ( 3 )

EP 0 405 412 A2

# Fig.2
## ( b )

(1)      (2)      (3)

EP 0 405 412 A2

## Fig. 2
### ( c )

(1)　　　　　(2)　　　　　(3)

EP 0 405 412 A2

# Fig. 2
## (d)

(1)　　　　　　　　　　　(2)　　　　　　　　　　　(3)

EP 0 405 412 A2